# EUROPEAN PATENT APPLICATION

(11) **EP 4 354 260 A1**
(43) Date of publication of application: **17.04.2024**
(21) Application number: 23197952.7
(22) Date of filing: 18.09.2023
(51) Int. Cl.: G06F 3/01, G06F 3/0354, G06F 3/041

(54) **ELECTRONIC APPARATUS AND CONTROLLING METHOD**

(30) Priority: 12.10.2022 JP 2022163806
(71) Applicant: Lenovo (Singapore) Pte. Ltd., New Tech Park 556741 (SG)
(72) Inventor: NISHINO, Hironari, Yokohama-shi, 220-0012 (JP); YANG, Xinmei, Yokohama-shi, 220-0012 (JP); MORI, Hidehisa, Yokohama-shi, 220-0012 (JP); TRAN, Thixuanmai, Yokohama-shi, 220-0012 (JP)
(74) Representative: Openshaw & Co.

(57) **Abstract**

The present invention aims to provide an electronic apparatus which is configured to generate a beep sound as vibrations. The electronic apparatus includes a processor, a memory, a signal generation circuit and a vibration generator. The processor executes a program. The memory stores the program. The signal generation circuit generates a beep signal for generating a beep sound. The vibration generator generates the vibrations on the basis of the beep signal.

## Description

### BACKGROUND OF THE INVENTION

### Field of the Invention

The present invention relates to an electronic apparatus and a controlling method.

### Description of the Related Art

An electronic apparatus such as, for example, a PC (Personal computer) has a function of generating a beep signal (see, for example, Japanese Unexamined Patent Application Publication No. 2017-76285). In one existing PC, a beep signal which is used for generation of a beep sound is output to a loudspeaker which is installed on a motherboard. In another existing PC which uses a motherboard which is not equipped with the loudspeaker, the beep signal is mixed with a main signal which is used for sound generation by a mixer and then is output to a loudspeaker that an audio system of the PC includes.

### SUMMARY OF THE INVENTION

However, a PC which is not equipped with the above-described mixer appears. Therefore, there are cases where it is impossible for the PC to mix the beep signal with the main signal and thus to output the beep sound over the loudspeaker.

The present invention aims to provide an electronic apparatus which makes it possible to generate the beep sound as vibrations and a controlling method for controlling the operations of the electronic apparatus.

An electronic apparatus according to the first aspect of the present invention is equipped with a processor which executes a program, a memory which stores the program, a signal generation circuit which generates a beep signal for generating a beep sound and a vibration generator which generates vibrations on the basis of the beep signal.

In the first aspect of the present invention, the electronic apparatus may be also equipped with a touchpad which includes the vibration generator.

In the first aspect of the present invention, the touchpad may be equipped with a touch sensor which detects a load, a drive circuit which drives the vibration generator and a control circuit which controls an operation of the drive circuit on the basis of the load, and the vibration generator may generate the vibrations which are used as haptic feedback which complies with an operation which is performed on the touchpad.

In the first aspect of the present invention, the signal generation circuit may output the beep signal to the drive circuit and the drive circuit may drive the vibration generator on the basis of the beep signal.

In the first aspect of the present invention, the signal generation circuit may output the beep signal to the control circuit and the control circuit may control the operation of the drive circuit on the basis of the beep signal.

A controlling method for controlling operations of an electronic apparatus which is equipped with a processor which executes a program, a memory which stores the program, a signal generation circuit which generates a beep signal for generating a beep sound and a vibration generator which generates vibrations on the basis of the beep signal according to the second aspect of the present invention includes steps of generating the beep signal for generating the beep sound and making the vibration generator generate the vibrations on the basis of the beep signal.

According to the above-described aspects of the present invention, it becomes possible to generate the beep sound as the vibrations.

### BRIEF DESCRIPTION OF THE DRAWINGS

FIG. 1 is a perspective view illustrating one example of an outer appearance of an electronic apparatus according to one embodiment of the present invention.
FIG. 2 is a diagram illustrating one example of a hardware configuration of the electronic apparatus according to one embodiment of the present invention.
FIG. 3 is a diagram illustrating one example of a configuration of a touchpad that the electronic apparatus according to one embodiment of the present invention includes.
FIG. 4 is a flowchart illustrating one example of operations of the electronic apparatus according to one embodiment of the present invention.

### DETAILED DESCRIPTION OF THE INVENTION

In the following, an electronic apparatus 10 according to one embodiment of the present invention will be described with reference to the drawings.

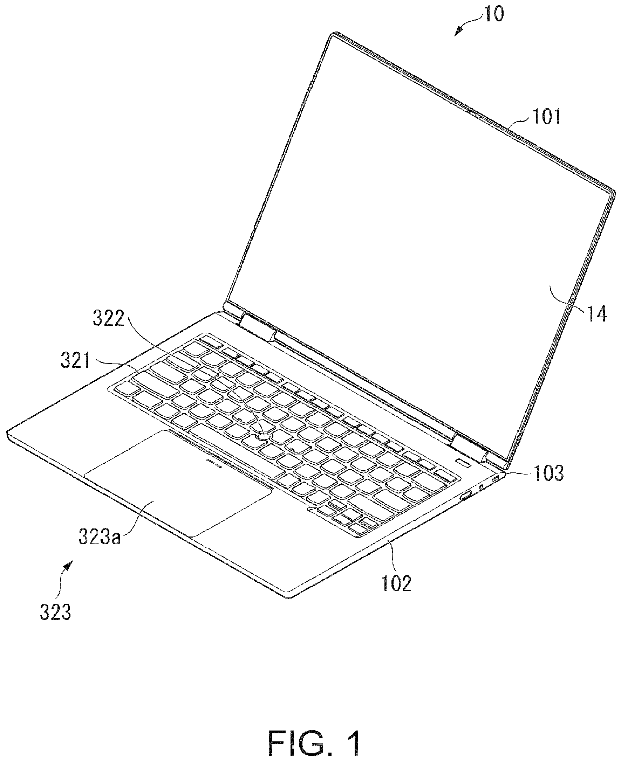

FIG. 1 is a perspective view illustrating one example of an outer appearance of the electronic apparatus 10 according to one embodiment of the present invention. The electronic apparatus 10 which is illustrated in FIG. 1 is, for example, a clamshell-type Laptop PC. The electronic apparatus 10 includes a first chassis 101, a second chassis 102 and a hinge mechanism 103. The first chassis 101 and the second chassis 102 are almost quadrilateral tabular (for example, plate-shaped) chassis. One side face of the first chassis 101 and one side face of the second chassis 102 are joined (coupled) together via the hinge mechanism 103 and thereby the first chassis 101 and the second chassis 102 are made to be rotationally movable relatively about an axis of rotation that the hinge mechanism 103 defines.

A display unit 14 is installed on an inner surface of the first chassis 101. In addition, a keyboard 321, a cursor movement pointer 322 and a touchpad 323 are installed on an inner surface of the second chassis 102. A predetermined number of keys is arrayed on the keyboard 312 and a user operates the keyboard 321 by depressing these keys. The user moves the cursor by operating the cursor movement pointer 322, for example, with the tip of his/her finger. The touchpad 323 includes a pad panel 323a which is an operation surface. The user performs an inputting operation by, for example, tracing or depressing the pad panel 323a with the tip of his/her finger.

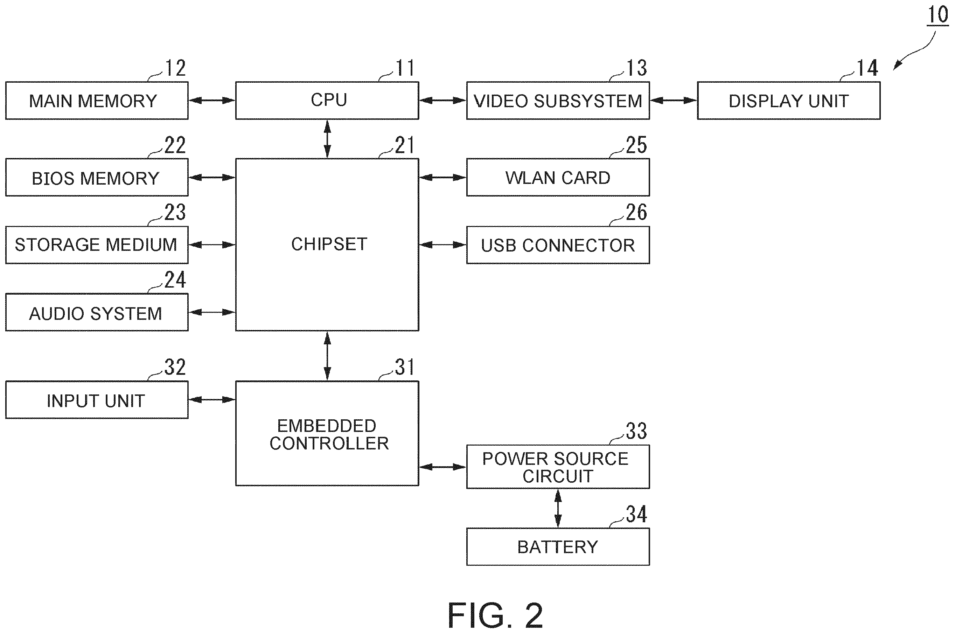

One example of a hardware configuration of the electronic apparatus 10 will be described with reference to FIG. 2. FIG. 2 is a block diagram illustrating one example of the hardware configuration of the electronic apparatus 10.

The electronic apparatus 10 includes a CPU (Central Processing Unit) 11, a main memory 12, a video subsystem 13, the display unit 14, a chipset 21, a BIOS (Basic Input Output System) memory 22, a storage medium 23, an audio system 24, a WLAN (Wireless Local Area Network) card 25, a USB (Universal Serial Bus) connector 26, an embedded controller 31, an input unit 32, a power source circuit 33 and a battery 34.

The CPU 11 executes various arithmetic processing operations under program control and controls the entire operation of the electronic apparatus 10. For example, the CPU 11 executes the arithmetic processing operations which are based on programs of OS (Operating system) and BIOS (Basic Input Output System). The CPU 11 is one example of a processor.

The main memory 12 is a writable memory which is utilized as an area into which an execution program of the CPU 11 is read or a work area into which processed data on the execution program is written. The main memory 12 is configured by, for example, a plurality of DRAM (Dynamic Random Access Memory) chips. This execution program includes the OS, various drivers for operating peripherals in hardware, various services/utilities, application programs and so forth.

The video subsystem 13 is adapted to realize functions which relate to image display and includes a video controller. The video controller processes a drawing command which is sent from the CPU 11, writes drawing information which is processed into a video memory and reads the drawing information out of the video memory and outputs the drawing information to the display unit 14 as drawing data (display data).

The display unit 14 is, for example, a liquid crystal display or an organic EL display and displays a display screen which is based on the drawing data (the display data) which is output from the video subsystem 13.

The chipset 21 includes controllers for controlling operations of a USB (Universal Serial Bus)-based bus, a serial ATA (AT Attachment)-based bus, an SPI (Serial Peripheral Interface)-based bus, a PCI (Peripheral Component Interconnect)-based bus, a PCI-Express-based bus, an LPC (Low Pin Count)-based bus and so forth and a plurality of devices is connected to the chipset 21 via these buses. As the plurality of devices, for example, the BIOS memory 22, the storage medium 23, the audio system 24, the WLAN card 25, the USB connector 26 and the embedded controller 31 which will be described later are included.

The BIOS memory 22 is configured by an electrically rewritable nonvolatile memory such as, for example, an EEPROM (Electrically Erasable Programmable Read Only Memory), a flash ROM and so forth. The BIOS memory 22 stores the BIOS, system firmware for controlling the operations of the embedded controller 31 and other devices and so forth. The BIOS memory 22 is one example of a sub-memory.

The storage medium 23 includes an HDD (Hard Disk Drive), an SSD (Solid State Drive) and so forth. For example, the storage medium 23 stores the OS, the various drivers, the various services/utilities, the application programs and various data.

A microphone and a loudspeaker which are not illustrated in the drawing are connected to the audio system 24 and thereby the audio system 24 records, reproduces and outputs sound data. Incidentally, the microphone and the loudspeaker are built in the electronic apparatus 10 by way of example.

The WLAN card 25 is connected to a network by a wireless (radio) LAN system and is used to perform data communication. For example, in a case where data is received over the network, the WLAN card 25 generates an event trigger which indicates data reception. The USB connector 26 is adapted to mutually connect the peripherals by utilizing the USB-based bus.

The input unit 32 indicates input elements which are installed on the electronic apparatus 10 in a lump. The input unit 32 includes the keyboard 321, the cursor movement pointer 322 and the touchpad 323 which are illustrated in FIG. 1. The input elements which are included in the input unit 32 output input information which is input by the operation of the user to the embedded controller 31.

The power source circuit 33 includes, for example, a DC/DC converter, a charge/discharge unit, an AC/DC adapter and so forth. For example, the power source circuit 33 converts a DC voltage which is supplied from an external power source such as an AC adapter (not illustrated) and so forth or from the battery 34 to voltages of a plurality of levels which are preferable to operate the electronic apparatus 10. In addition, the power source circuit 33 supplies electric power to respective units of the electronic apparatus 10 on the basis of control by the embedded controller 31.

The battery 34 is a secondary battery such as, for example, a lithium-ion battery and so forth. In a case where the electric power is supplied to the electronic apparatus 10 from the external power source, the battery 34 is charged via the power source circuit 33. In a case where the electric power is not supplied to the electronic apparatus 10 from the external power source, the battery 34 outputs the electric power which is accumulated as the electric power for operating the electronic apparatus 10 via the power source circuit 33.

The embedded controller 31 is a One-Chip Microcomputer which monitors and controls operations of various devices (the peripherals, sensors and so forth) regardless of the state of the system of the electronic apparatus 10. The embedded controller 31 includes a CPU, a ROM, a RAM, A/D input terminals and D/A output terminals of a plurality of channels, a timer and digital input/output terminals which are not illustrated in FIG. 2. The input unit 32, the power source circuit 33 and so forth are connected to the digital input/output terminals of the embedded controller 31 and the imbedded controller 31 controls the operations of the input unit 32, the power source circuit 33 and so forth. In addition, the embedded controller 31 controls an operation of changing a clock frequency and so forth of the CPU 11 via the chipset 21.

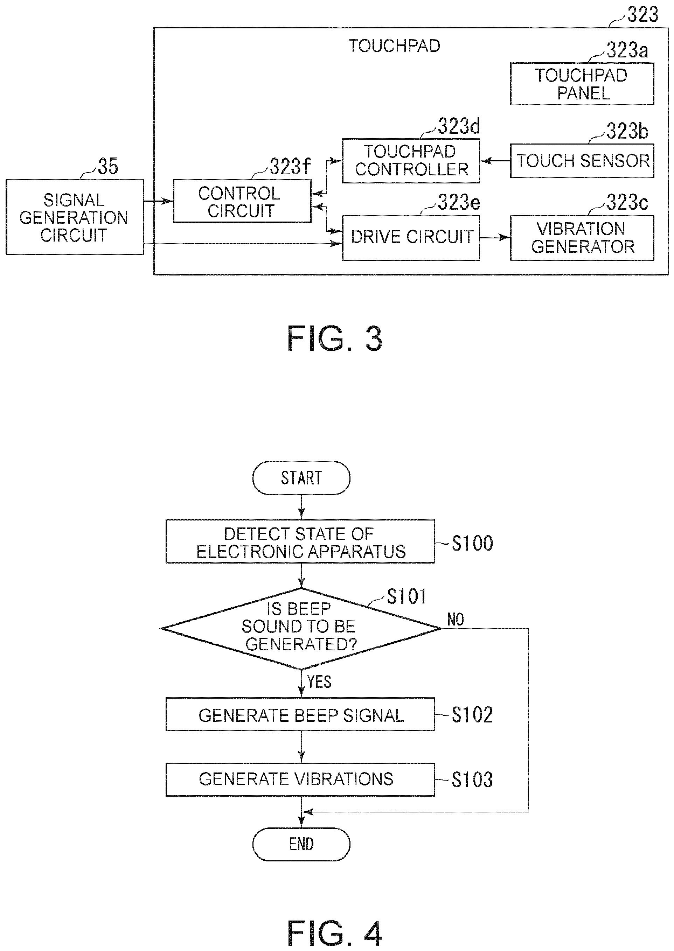

FIG. 3 illustrates one example of a configuration of the touchpad 323 that the input unit 32 has. The touchpad 323 includes a touchpad panel 323a, a touch sensor 323b, a vibration generator 323c, a touchpad controller 323d, a drive circuit 323e and a control circuit 323f.

The touchpad panel 323a is installed on the inner surface of the second chassis 102. The user performs an operation on the touchpad panel 323a by bringing his/her fingertip into contact with the touchpad panel 323a. The touch sensor 323b detects a value (a load value) of a load which is imposed on the touchpad panel 323a and coordinates (a position) that the load is imposed. The touch sensor 323b outputs a signal which indicates the load value and the position that it detects to the touchpad controller 323d.

The vibration generator 323c is, for example, an actuator and generates vibrations for giving haptic feedback which complies with an operation that the user performs on the pad panel 323a to the user. In addition, the vibration generator 323c generates vibrations which would substitute for a beep sound.

It is possible to perform a click operation on the touchpad 323. In a case where the value of the load which is detected by the touch sensor 323b in a button area is more than a predetermined threshold value and meets a predetermined condition, the touchpad controller 323d decides that the click operation is performed. The touchpad controller 323d outputs operation data which corresponds to the click operation to the control circuit 323f.

The drive circuit 323e drives the vibration generator 323c. The control circuit 323f controls the operation of the drive circuit 323e. In a case where the control circuit 323f decides that the click operation is performed, the control circuit 323f makes the vibration generator 323c generate vibrations. The vibration generator 323c generates the vibrations which serve as the haptic feedback.

The chipset 21 or the embedded controller 31 configures a signal generation circuit 35 which generates the beep signal for emitting the beep sound. The beep signal that the signal generation circuit 35 outputs is the same as the existing beep signal. The signal generation circuit 35 outputs the beep signal to the control circuit 323f by using, for example, I2C communication. The control circuit 323f controls the operation of the drive circuit 323e on the basis of the beep signal or the signal generation circuit 35 outputs the beep signal to the drive circuit 323a by using, for example, GPIO communication. The drive circuit 323e makes the vibration generator 323c generate vibrations which substitute for the beep sound in accordance with control by the control circuit 323f or on the basis of the beep signal.

The vibration generator 323c may generate vibrations of a pattern which is the same as the pattern of the beep sound. For example, in an existing electronic apparatus, a short beep sound is emitted a predetermined number of times. In the electronic apparatus 10, the vibration generator 323c may generate a short vibration a predetermined number of times. The vibration generator 323c may generate vibrations of a pattern which is different from a pattern of vibrations which are generated as the haptic feedback.

Processing which relates to generation of the vibrations which is based on the beep signal in the electronic apparatus 10 will be described with reference to FIG. 4. FIG. 4 is a flowchart illustrating one example of the operations of the electronic apparatus 10.

### (Step S100)

The signal generation circuit 35 detects the state of the electronic apparatus 10.

### (Step S101)

The signal generation circuit 35 decides whether the beep signal is to be generated on the basis of the state of the electronic apparatus 10 which is detected in Step S100. A condition for generating the beep signal may be the same as the condition which is used in the prior art. In a case where there is no need to generate the beep signal, the operation which is illustrated in FIG. 4 is terminated. In a case where it is preferable to generate the beep signal, the process proceeds to Step S102.

### (Step S102)

The signal generation circuit 35 generates the beep signal and outputs the beep signal to the control circuit 323f or the drive circuit 323e.

### (Step S103)

In a case where the beep signal is output from the signal generation circuit 35 to the control circuit 323f, the control circuit 323f controls the operation of the drive circuit 323e on the basis of the beep signal. The drive circuit 323e makes the vibration generator 323c generate the vibrations in accordance with control by the control circuit 323f. In a case where the beep signal is output from the signal generation circuit 35 to the drive circuit 323e, the drive circuit 323e makes the vibration generator 323c generate the vibrations on the basis of the beep signal.

A concrete example of beep signal generation will be described. In the following example, mainly in a case where an abnormality of the electronic apparatus 10 is detected, the signal generation circuit 35 generates the beep signal. However, a timing that the signal generation circuit 35 generates the beep signal is not necessarily limited to a timing that the abnormality of the electronic apparatus 10 is detected.

For example, in a case where the power source of the electronic apparatus 10 is turned on, the signal generation circuit 35 executes POST (Power-on Self-test) by using the function of the BIOS. The chipset 21 detects states of the CPU 11, the main memory 12, the video subsystem 13, the storage medium 23, the keyboard 321, the power source circuit 33 and so forth. The signal generation circuit 35 generates the beep signal which depends on a state such as the abnormality and so forth of the electronic apparatus 10.

The signal generation circuit 35 may execute a controlling operation which relates to a power-on password. The power-on password is a password that the user inputs in a case where the power source of the electronic apparatus 10 is turned on. In a case where a power-on password which is set in advance is input, the electronic apparatus 10 starts up. In a case where a password which is different from the power-on password which is set in advance is input, the electronic apparatus 10 does not start up.

The BIOS memory 22 stores a character string which is set as the power-on password. The character string may include numerals, symbols and so forth.

In a case where the electronic apparatus 10 starts up, the user operates, for example, the keyboard 321 and inputs a character string which is set as the password. Alternatively, the user may input the password by operating the touchpad panel 323a. The signal generation circuit 35 reads the character string which is set as the power-on password out of the BIOS memory 22 and compares the readout character string with the character string which is input as the password.

In a case where the character string which is input by the user is the same as the character string which is stored in the BIOS memory 22, the signal generation circuit 35 hands over the processing to the CPU 11. The CPU 11 activates the OS and executes the processing in accordance with the OS. In a case where the character string which is input by the user is different from the character string which is stored in the BIOS memory 22, the signal generation circuit 35 detects inputting of an incorrect password as the abnormality and generates the beep signal.

The signal generation circuit 35 may execute a controlling operation which relates to a setup password. The setup password is a password that the user inputs in a case where a BIOS setup program is executed. In a case where a setup password which is set in advance is input, it becomes possible for the user to set various items of the BIOS. In a case where a password which is different from the setup password which is set in advance is input, the user is not allowed to set the various items of the BIOS. In a case where a character string which is input by the user is different from the character string which is stored in the BIOS memory 22 as the setup password, the signal generation circuit 35 may detect input of an incorrect password as the abnormality. In that case, the vibration generator 323c may generate the vibrations as in the case where the incorrect power-on password is input.

The vibrations which are generated from the vibration generator 323c are transferred to the touchpad panel 323a. In a case where the user brings his/her fingertip into contact with the touchpad panel 323a or the user puts a part of his/her body such as, for example, his/her hand and so forth on the touchpad panel 323a, the vibrations are transferred to the user. Accordingly, it becomes possible for the user to recognize generation of the vibrations in place of the beep sound. In a case where the sound generates from the vibrations that the vibration generator 323c generates, it becomes possible for the user to know generation of the sound.

As described above, the signal generation circuit 35 generates the beep signal for generating the beep sound and the vibration generator 323c generates the vibrations on the basis of the beep signal. Thereby, it becomes possible for the electronic apparatus 10 to generate the beep sound as the vibrations. In addition, it becomes also possible for the electronic apparatus 10 to generate vibration-dependent sounds.

In a case where information which is input into the electronic apparatus 10 via the keyboard 321 or the touchpad panel 323a is different from the information which is stored in the BIOS memory 22, the signal generation circuit generates the beep signal. Thereby, in a case where an incorrect power-on password, an incorrect setup password or the like is input into the electronic apparatus 10, it becomes possible for the electronic apparatus 10 to notify the user of occurrence of the abnormality.

Incidentally, the electronic apparatus 10 according to one embodiment of the present invention is configured as a portable-type one just like, for example, a clamshell-type personal computer, a tablet terminal, a smartphone and so forth and is in the form that the display device is integrally attached to the chassis. However, the electronic apparatus 10 according to one embodiment of the present invention may be also in the form that the main body of each individual device is connected with the display device just like, for example, a desktop-type personal computer. Further, the electronic apparatus 10 according to one embodiment of the present invention is applicable to apparatuses in general which each includes the CPU.

Although one embodiment of the present invention is described in detail with reference to the drawings as above, the concrete configuration of the electronic apparatus 10 is not limited to the above-described embodiment and also a design change and other changes of the electronic apparatus 10 which are made within the range not deviating from the gist of the present invention are also included.

### [Description of Symbols]

10: electronic apparatus, 11: CPU, 12: main memory, 13: video subsystem, 14: display unit, 21: chipset, 22: BIOS memory, 23: storage medium, 24: audio system, 25: WLAN card, 26: USB connector, 31: embedded controller, 32: input unit, 33: power source circuit, 34: battery, 35: signal generation circuit, 101: first chassis, 102: second chassis, 103: hinge mechanism, 321: keyboard, 323: touchpad, 323a: touchpad panel, 323b: touch sensor, 323c: vibration generator, 323d: touchpad controller, 323e: drive circuit, 323f: control circuit

## Claims

1. An electronic apparatus comprising:
a processor which executes a program;
a memory which stores the program;
a signal generation circuit which generates a beep signal for generating a beep sound; and
a vibration generator which generates vibrations on the basis of the beep signal.

2. The electronic apparatus according to claim 1, further comprising:
a touchpad which includes the vibration generator.

3. The electronic apparatus according to the claim 2, wherein
the touchpad further includes
a touch sensor which detects a load,
a drive circuit which drives the vibration generator and
a control circuit which controls an operation of the drive circuit on the basis of the load, and
the vibration generator generates the vibrations which are used as haptic feedback which complies with an operation which is performed on the touchpad.

4. The electronic apparatus according to claim 3,
wherein
the signal generation circuit outputs the beep signal to the drive circuit and
the drive circuit drives the vibration generator on the basis of the beep signal.

5. The electronic apparatus according to claim 3,
wherein
the signal generation circuit outputs the beep signal to the control circuit and
the control circuit controls the operation of the drive circuit on the basis of the beep signal.

6. A controlling method for controlling operations of an electronic apparatus which comprises a processor which executes a program, a memory which stores the program, a signal generation circuit which generates a beep signal for generating a beep sound and a vibration generator which generates vibrations on the basis of the beep signal, comprising:
generating the beep signal for generating the beep sound; and
making the vibration generator generate the vibrations on the basis of the beep signal.
